# EUROPEAN PATENT APPLICATION

(11) **EP 1 249 161 A1**
(43) Date of publication of application: **16.10.2002**
(21) Application number: 00900847.5
(22) Date of filing: 20.01.2000
(51) Int. Cl.: A01K 85/00, A01K 91/06

(54) **FLOATING HEAD EYE**

(71) Applicant: Yamamoto, Kantaro, Utsunomiya-shi, Tochigi 320-0071 (JP)
(72) Inventor: Yamamoto, Kantaro, Utsunomiya-shi, Tochigi 320-0071 (JP)
(74) Representative: Hooiveld, Arjen Jan Winfried
(86) International application number: JP0000266
(87) International publication number: WO01052644

(57) **Abstract**

This is an invention to facilitate exchange of floating system fishing tackles of Floating Hook Lure, etc. and to give compatibility to the existing lures and fishing tackles. It is Floating Head Eye half fixing and setting a removable head eye on a traction part of a frame by rationally using the shape and elasticity of frame resin, etc. forming a hole by making it possible for the line system pass through the inside of the frame by providing a properly shaped hole at a proper position of the lure main body hardly influencing upon swimming of the lure. Consequently, compatibility with the ordinary lures is given to the floating fishing tackles such as Floating Hook Lure, etc., and it is possible to speedily correspond to exchange of Floating Hook Lure itself. This invention is largely related to Floating Hook Lure already applied for registration but different from it in functions to insist on, but has generality to be applied extensively for general floating fishing tackles except for Floating Hook Lure.

## Description

### Technical Field

This invention is concerning a field of fishing. The applicant has also applied for registration of a jerk bait called "Floating Hook Lure" . This is a floating fishing hook to land a fish by separating a hook part mechanism and a lure main body simultaneously when it hits the fish; but this "Floating Head Eye" gives compatibility with a normal lure (existing lure, that is, an eye fixed type lure), etc. without influencing upon a catching function this floating fishing hook has, facilitates a change and makes it possible to easily select and use the floating head eye under the circumstance where existing fishing tools and existing lures are mixed and exist.

### Background Art

Recently, lure fishing has been getting popular. Not only in the US but also in Japan and the other parts of the world, this lure fishing has been established as a new field of leisure industry and fishing industry.

As an example of development of fishing instruments, Floating Hook Lure (May 27, 1996, PCT/JP97/01772) can be pointed out. Floating Hook Lure has been invented and applied for registration by the applicant, but it has been appealed that it displays very excellent fishing force by a test practiced by the inventor himself.

However, with Floating Hook Lure, restringing of the hook part and a fishing line is required, and convertibility with the ordinary lure often used by using a snap (a small part to easily connect a fishing tackle and a fishing line of a lure, etc. by one action and to exchange it) has been also little and short.

### Disclosure of the Invention

As an example of applying this invention, a hole (release hole) capable of sufficiently passing a small part through it with little influence upon lure behavior is drilled through from the back side of a lure head to a trunk surface (the tail part side of a lip mainly).

The hook part is devised to be released from the lure main body by force of the fish hit on the lure.

In this invention to be practiced by connecting it to the hook part, the head eye half-fixed and set at the same position as the conventional lure is released in accordance with removal of the hook part, and even when it is further strongly pulled by the fish, the fishing line and the accessories (snap, etc.) connected to the fisherman s side of the head eye can pass through the lure main body. Of course, the lure main body is released on the line and never lost in the field.

In the meantime, a function is satisfied by introducing the fishing line to the inside of the lure main body from a fine hole (traction hole) set on a head part to equip the lure on Floating Hook Lure, but, it is possible for the fisherman to enjoy fishing by only accessing the head eye in the same way as the existing lure by invention of Floating Head Eye.

That is, by the invention of Floating Head Eye, a function of the floating hook lure "the lure main body is released on the fishing line simultaneously at the time of hitting, and the lure main body in appearance is eliminated" . In other words, it is possible to handle Floating Hook Lure as the existing lure until the fish hits.

As an example, seeing the practiced release hole from above an upper surface of the floating hook lure main body, it looks like horns of a beetle or nippers, but the half-fixed head eye is held at a position corresponding to a head end crossing point of the two horns (that is a position of the fixed head eye of the existing lure). A structure curved as a horn of the beetle is suitable for setting a hole inside and concentrating holding force to the head eye on the head end. Simultaneously, it is rational to use it without any large amendment to a silhouette of the lure main body. That is, because the silhouette of the lure is an important element to decide swimming and behavior of the lure.

Besides, there is a method to realize Floating Head Eye by opening the release hole on the lip side (trunk part side). Also, there is a method to realize it making a resin or metal ring substitute for the release hole by attaching it on the lure main body instead of drilling the hole.

### Brief Description of Drawings

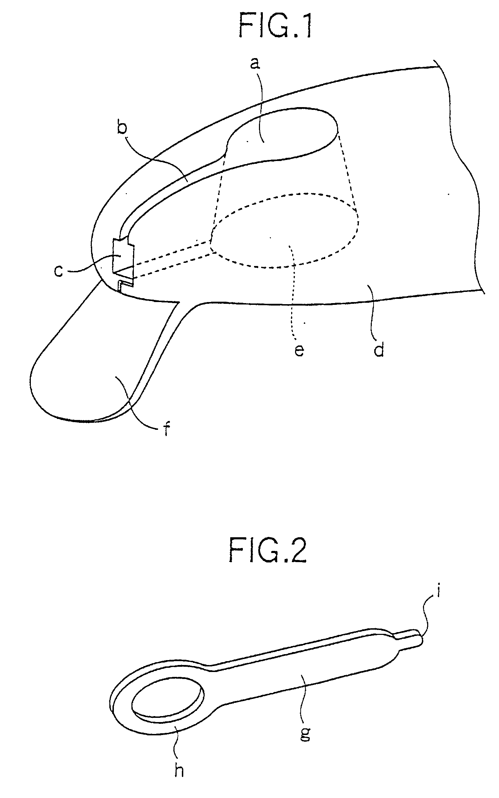

Fig.1 shows how to use Floating Head Eye for a floating fishing tackle, and Fig.2 shows a part (half-fixed head eye) to use in combination with the Fig.1.

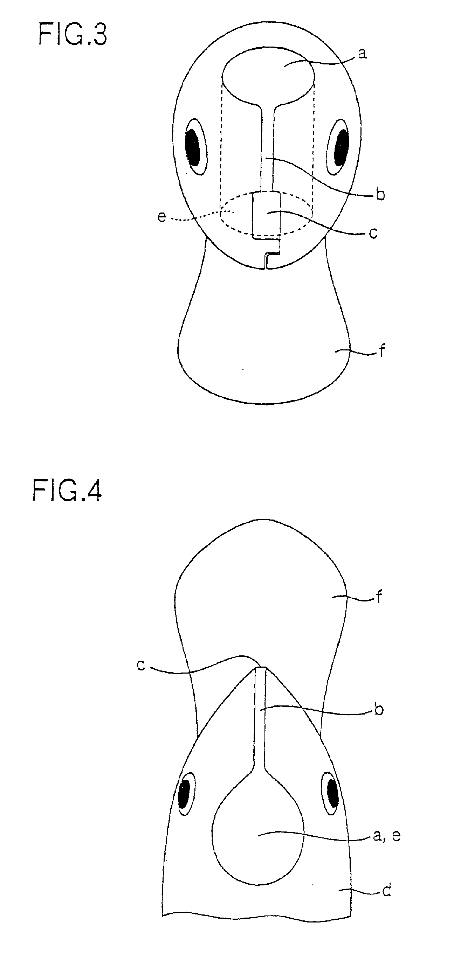

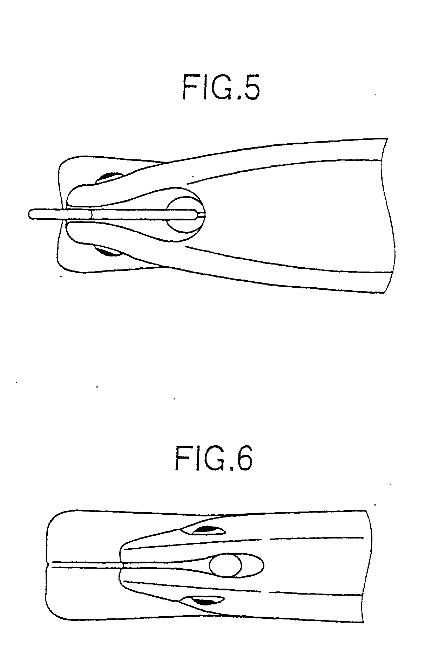

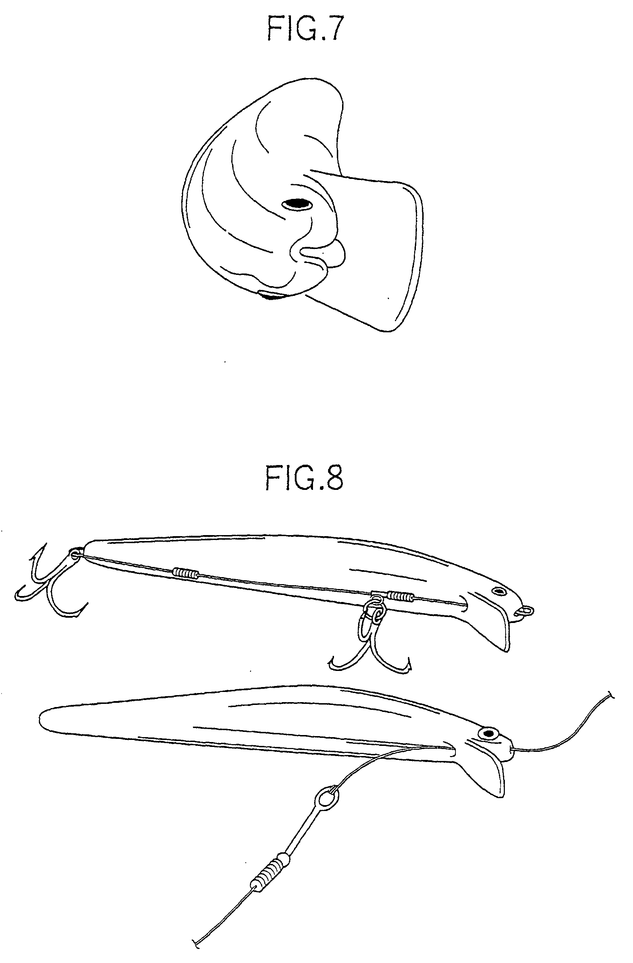

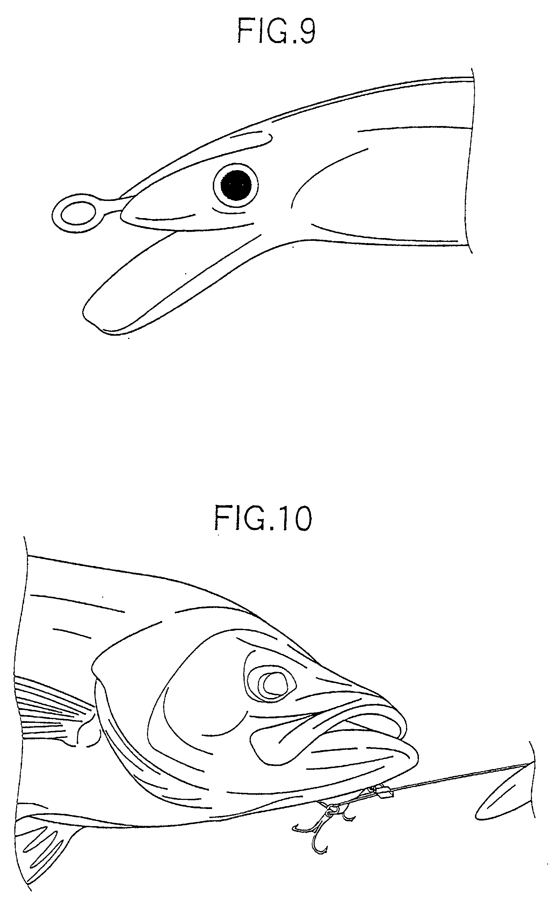

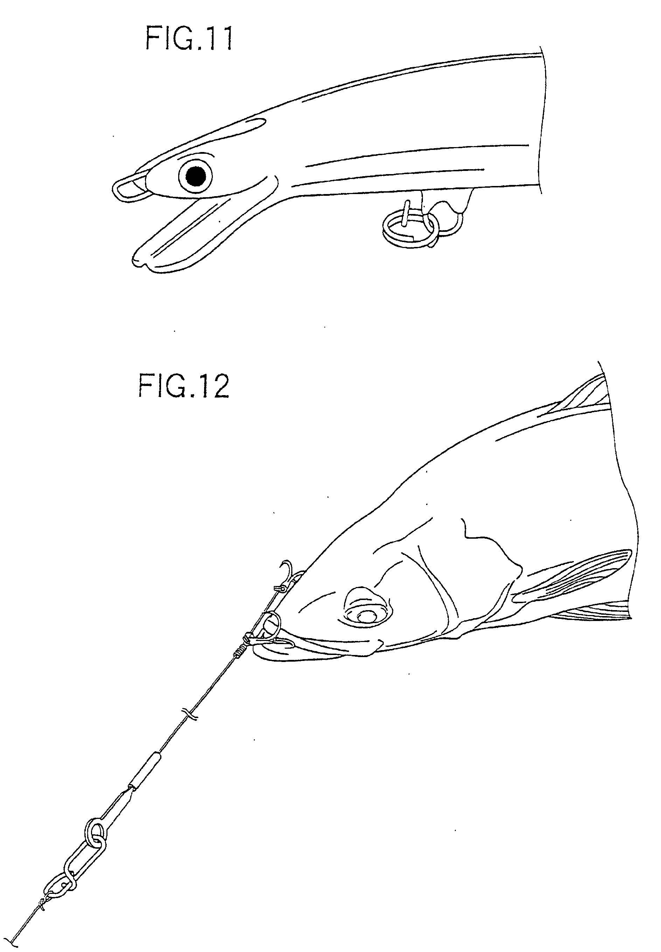

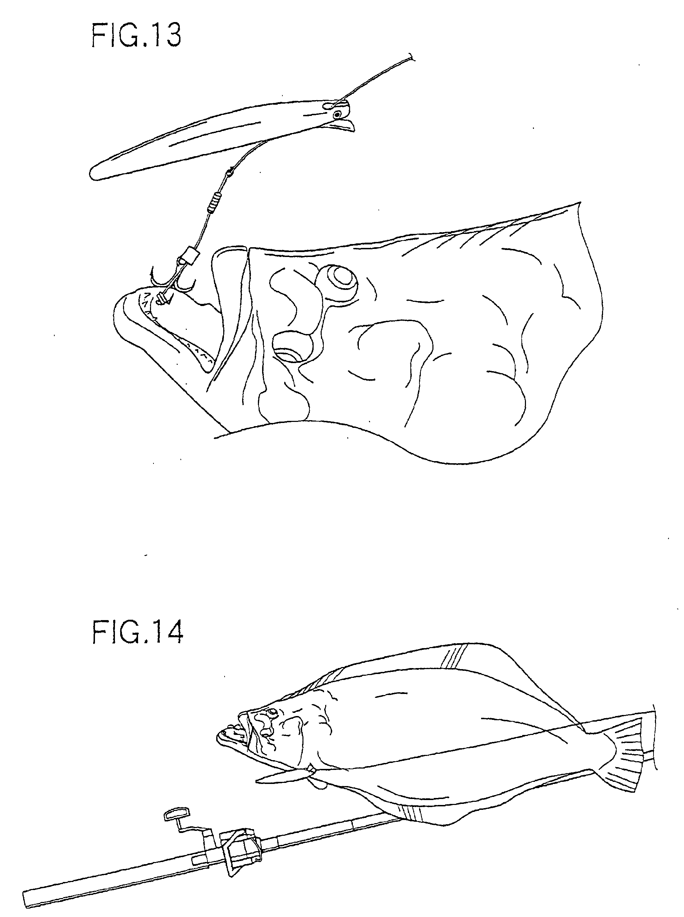

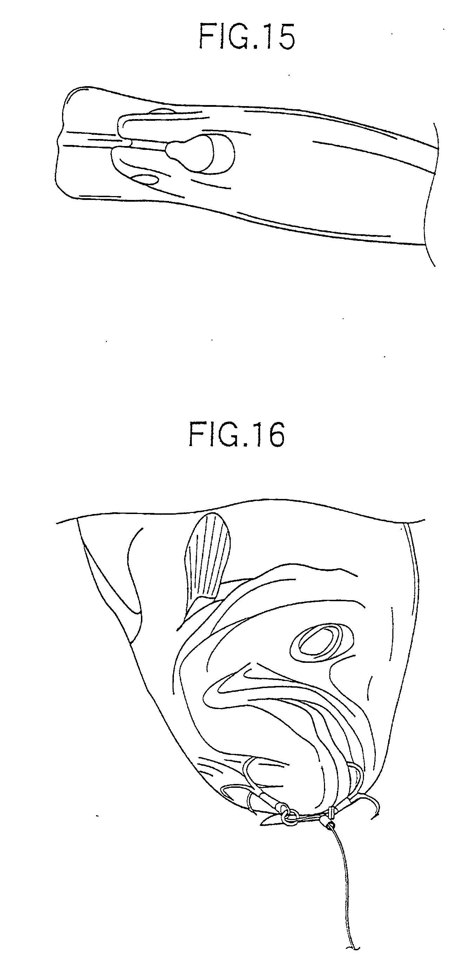

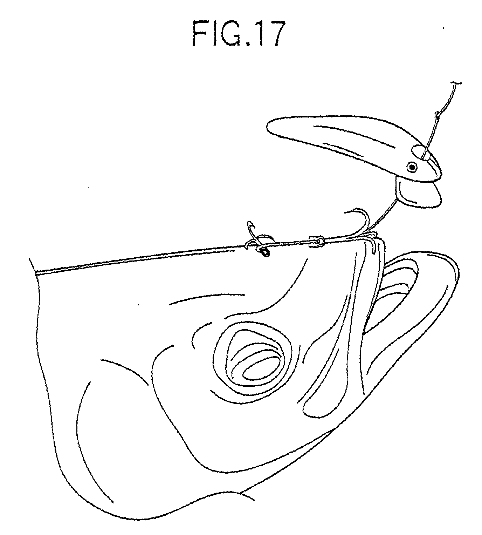

(a): back side opening of a release hole, (b): guide slit, (c): suspended gate, (d): lure main body, (e): trunk side opening of a release hole, (f): lip, (g): half-fixed head eye, (h): head eye, (i): joint rod Fig.3 shows the front in case of adopting this invention for Floating Hook Lure. Fig.4 is a plane view of the Fig.3. Fig.5 and Fig.6 are execution drawing of Floating Head Eye. Fig.7 is an example of using the release hole on the trunk side. Fig.8 is an execution drawing to show a difference of simplicity between an example of line connection on Floating Hook Lure as a single body (below) and Floating Hook Lure in case of applying this invention. Fig.9 is an example of the Fig.6 equipped with the half-fixed head eye of (g). Fig.10 is a drawing that Floating Hook Lure perfectly works by practicing the Fig.9 and a fish is caught. Fig.11 is an execution drawing of Floating Hook Lure equipped with Floating Head Eye seen from the side surface. Fig.12 is a drawing of the fish caught by practicing the Fig.11 and the snap passing through the lure main body can be observed. Fig.13 and Fig.14 are drawings to show a scene of catching a target by Floating Hook Lure equipped with Floating Head Eye. Fig.15 is an execution drawing of the release hole seen diagonally from above a frame. Fig.16 is an execution drawing of the lure main body separated far a way and only with a hook unit and that motion of Floating Hook Lure is perfectly maintained. Fig.17 is an example of the lure main body happened to approach the target after landing. The main body is freely opened.

### Best Mode for carrying out the invention.

This invention is explained with the attached drawings. This invention is executed by suspending the part (g) (half-fixed head eye) in Fig.2 in proper pressure and shape suitable for the Fig.1 (c) (suspended gate) and connecting the objective floating fishing tackle to a joint rod (i). As shown in the plane view of Fig.4 , the suspended gate of (c) is set at a position corresponding to the head end of a shape of scissors formed between the release hole and the frame body. However, as it is possible to suspend the head eye even without elasticity if a groove of proper side and shape is made, and it can be practiced or executed. However, it is advantageous to use elasticity of the frame body to prevent abrasion and slackness. Resin elasticity is used for test fishing for this matter. Connection to the floating fishing tackle or other fishing tools is carried out by using a cladding method to the joint rod (i) or a welding method, etc. Fig. 5 to Fig.17 are combination of the examples proved by the mechanism of Floating Head Eye and test fishing. The release hole as shown in the Fig.5 and Fig.6 seem to be too daring. However, even as regards the behavior of the lure or as regards the target, no problem occurs. It is because the silhouette of the single floating hook lure is used for these two kinds of the frames for experiment. That is, swimming as the lure can be maintained without any new adjustment, and consequently, influence on the swimming is small or next to nothing. Of course, the fact that existence of this release hole is harmless against attraction force to the fish is proved by the result of landing 25 pieces of the fish (targets) within 11 days. As the release hole can be designed in accordance'with the snap, it will not be an obstacle for passing of the line system, and if it is arranged in consideration of relations with a water current, it is possible to correct the jerk bait which tends to swim with its tail up to swim horizontally. This invention is executed as above.

### Possibility of using for the Industry

In the field of lure fishing, the applicant has already applied for registration of Floating Hook Lure. Functions aimed at by the floating hook lure are sufficient, and even the result of experiment has been proved to be fairly excellent.

However, in case of using Floating Hook Lure alone, there is no trouble, but when using it with the conventional ones together, there used to be many problems. Performance of Floating Hook Lure is never damaged or spoiled and trouble of restringing to the fishing line is eliminated, and at the same time, compatibility with the normal lure is given.

It is possible for the user to enjoy this epochmaking performance of Floating Hook Lure.

Additionally, Floating Head Eye can be used even for an artificial bait such as taco-bait (a kind of lures) to be used for fishing of marine (kajiki), tuna (maguro), etc. For example, while taco?bait (a kind of lure) is made of a soft material to attempt the fish to eat (to lead the fish to hit) only, with Floating Head Eye, it comes to be possible to freely apply it to any other various kinds of materials hard or of various lusters and to more perfectly open the hook. It is expected to further activate not only the leisure and lure fishing industry but also the fishing industry itself with the invention of Floating Head Eye.

## Claims

1. A structure and an idea of Floating Head Eye which gives compatibility and convenience to use with the existing fishing lures and tackles, etc. as well as facilitates exchange and use of the floating fishing tackles without losing characteristic performance of the floating fishing tackles by applying a shape to work with the frame body on a part of the frame body of the floating fishing tackle (a kind of floating hook lure), setting a half-fixed traction terminal (half-fixed head eye) or a terminal part by mutually using elasticity of resin, magnetic force, elasticity of metallic parts, etc., properly releasing the head eye in accordance with the behavior of the floating fishing tackle connected to the half-fixed head eye suspended there and returning to the initial half-fixed state as required.

2. A Structure and an idea of Floating Head Eye which gives compatibility and convenience with the existing lure without spoiling performance of the floating fishing tackle, by passing the fishing line, etc. through a hole (release hole) in the shape not to damage the line along the trunk part side of a head part of the lure main body to the same trunk part as well as from the back side of the lure main body head part to the trunk part, setting a ring (release ring) in the shape not to damage the fishing line, etc. on a part of the frame as in the case, securing passing space for the fishing line, the snap, etc. to be used for the floating fishing tackles of Floating Hook Lure , etc. to be connected to this invention, concentrating elasticity of the frame resin to the head eye suspending portion by using the shape of release hole, half fixing the head eye at a proper position by reciprocally working the shape and elasticity of the metallic parts, etc. to be used for the head eye with the elasticity to each other, properly releasing the head eye in accordance with movement transmitted from the floating fishing tackle, or returning it to the initial half-fixed state.
Remarks: snap (a general small part to connect the fishing rod and the fishing line of the lure, etc. to each other.)
